# EUROPEAN PATENT APPLICATION

(11) **EP 1 747 907 A2**
(43) Date of publication of application: **31.01.2007**
(21) Application number: 06117427.2
(22) Date of filing: 18.07.2006
(51) Int. Cl.: B42D 15/04

(54) **Improved postcard and manufacturing process thereof**

(30) Priority: 27.07.2005 IT TO20050524
(71) Applicant: Cotognini, S.r.l., 62100 Macerata (IT)
(72) Inventor: Cotognini, Paolo, 62100 Macerata (IT)
(74) Representative: Gallarotti, Franco

(57) **Abstract**

A postcard (1) has a body that comprises a front part (10, 30) and a back part (20) mutually joined, between which a receptacle (31) is formed, adapted to house an optical disk (2). A first substantial portion of the front part (10, 30) is permanently joined to the back part (20), whereas another substantial portion of the front part (10, 30) is separate from the back part (20), to enable positioning the disk (2) in the receptacle (31). The second substantial portion of the front part (10, 30) is applicable in adhesive fashion to the back part (20), to close the receptacle (31) that is to contain the disk (2).

## Description

The present invention relates to postcards and it was developed with particular attention being paid to postcards adapted to contain optical disks and thin objects in general.

Postcards of this type are known and usually comprise a body formed by a front part and a back part. The back part is typically constituted by a thin cardboard, having a recess able to receive an optical disk, such as a CD or a DVD. The front part is instead constituted by a clear plasticization film, which is fixed in a permanent way to the front face of the aforesaid cardboard, fully covering it, in order to close superiorly the recess in which the disk has been previously housed. For the purposes of extracting the disk from the postcard, the plastic sheet can be removed or, more simply, the postcard can be torn.

This kind of solution requires the optical disk be placed in the postcard before the end of the manufacturing thereof, which circumstance complicates the production process and may cause damages to the optical disk.

A possible solution to this problem is provided by the postcard described and illustrated in WO 02/36355. In this embodiment, the body of the postcard has a main back part, obtained starting from two sheets of paper material of equal dimensions, and in particular a solid lower sheet and an upper sheet provided with a through hole. The two sheets are glued on top of one another, to form a single body, with a region of the lower sheet that closes one end of the hole of the upper sheet, thereby forming a recess in which an optical disk can be positioned. In a possible embodiment, the postcard is then completed with a front part constituted by a removable element made of plastic material, formed to have curved edges that form longitudinal guides able to receive the homologous edges of the aforesaid back part of the body of the postcard.

With this embodiment, the disk may be positioned in the respective recess also after the manufacture of the postcard, but the cost of the postcard is high. Irrespective of the presence of the disk, the weight of the postcard is markedly higher than traditional postcard, because of the presence of the aforesaid removable element, and the fact that said element has to have its edges configured to be coupled with those of the paper body also causes an increase in the overall postcard bulk. Rough handling of the postcard, which can typically take place when the mail is collected or routed by the postal services, may lead to the breakage of the removable element or its accidental separation from the paper body where the housing for the disk is defined.

The primary aim of the present invention is to overcome the aforesaid drawbacks. Within this frame, a general aim of the present invention is to provide a postcard of the type indicated above which, whilst being economical to manufacture and with appreciably contained weight and bulk, is versatile, simple and safe to use, not only for final users, but also for manufacturers of paper and cardboard products.

These and other aims are achieved, according to the present invention, by a postcard and by a process having the characteristics specifically set out in the annexed claims, which are an integral part of the descriptive content of the present patent application.

Additional aims, characteristics and advantages of the present invention shall become readily apparent from the description that follows with reference to the accompanying drawings, provided purely by way of non limiting example, in which:
- Figures 1 and 2 are schematic perspective views of a postcard obtained in accordance with the invention;
- Figures 3 and 4 are exploded views, from two different angles, of the card of Figures 1 and 2;
- Figure 5 schematically represents, with simplified views, a possible sequence of operations aimed at obtaining a front part of the body of the postcard of Figures 1-4;
- Figure 6 schematically represents, with simplified views, a sequence of operations aimed at obtaining a back part of the body of the postcard of Figures 1-4;
- Figure 7 is a schematic perspective view of the postcard of Figures 1 and 2, in a step of inserting a related object.

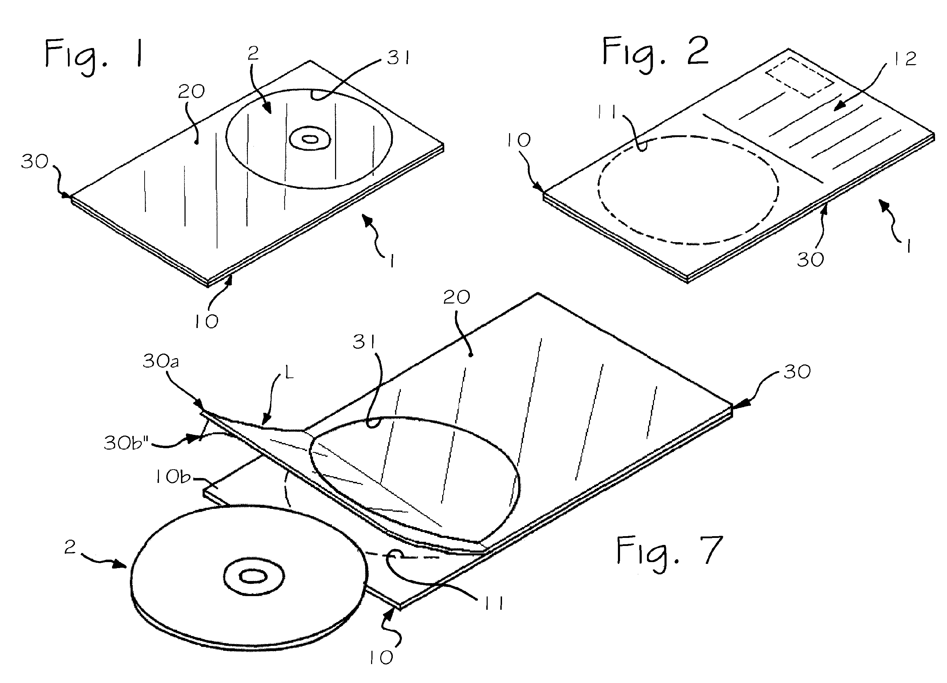

In Figures 1 and 2, reference number 1 globally indicates a postcard manufactured in accordance with the present invention, of the type suitable for containing a thin, light object; in the exemplified case, the object in question is an optical disk, such as a CD or a DVD, designated by reference number 2.

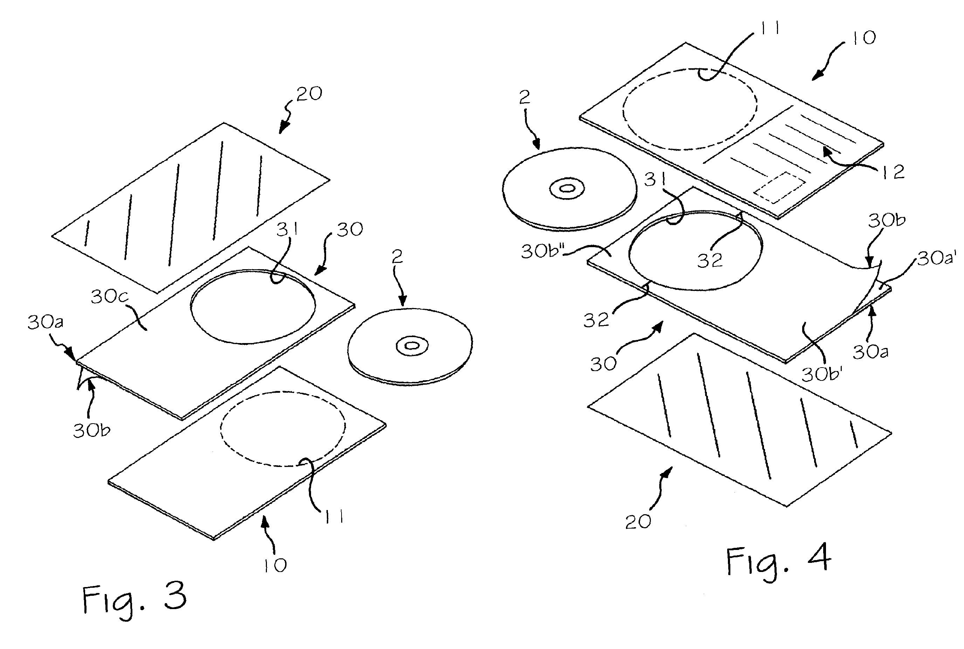

The postcard 1 has a body formed by a plurality of layers having equal height and width, mutually superposed; in the exemplified case - and as visible particularly in Figures 3 and 4 - the aforesaid layers are constituted by a rear paper sheet 10, a front plastic sheet 20 and an intermediate paper sheet 30.

In the intermediate sheet 30 a through opening 31 is defined, here having a circular shape, of such dimensions as to be able to receive an optical disk; on the surface of the sheet 30 that remains visible there can be printed, in the region not involved by the opening 31, illustrations or ornamental motifs of any nature whatsoever.

In the rear sheet 10 a dashed-line perforation 11 is defined, having an overall circular shape, whose diameter is substantially similar to that of the opening 31 of the intermediate sheet 30; on the surface of the sheet 10 destined to remain visible there can be printed, preferably in the region not involved by the perforation 11, references for attaching a stamp and writing the address of the recipient of the postcard 1, globally designated by reference 12 in Figures 2 and 4.

The intermediate sheet 30 is self-adhesive; for this purposes, as shown in Figures 3 and 4, the sheet 30 comprises a base thin cardboard 30a, e.g. a 300 g/m² cardboard, having a respective surface 30a', made entirely adhesive by the application of a glue; on the adhesive surface 30a' a removable film is applied, designated as 30b, e.g. made of silicone paper.

As shown in Figure 4, the sheet 30 has, in its face to be fastened to the rear sheet 10, two incisions or cuts 32; said cuts 32 preferably depart from diametrically opposite points of the circumference of the opening 31, to extend up to a respective lateral edge of the intermediate sheet 30; the cuts 32 involve practically only the film 30b, subdividing it in two distinct parts, designated by the references 30b' and 30b" in Figure 4.

The rear sheet 10 preferably has a reduced thickness relative to the intermediate sheet 30 and can be for example made of 200 g/m² mould made paper. The front plastic sheet 20, which is preferably glossy and transparent, is of the type commonly used in the industry to plasticize the front part of postcards.

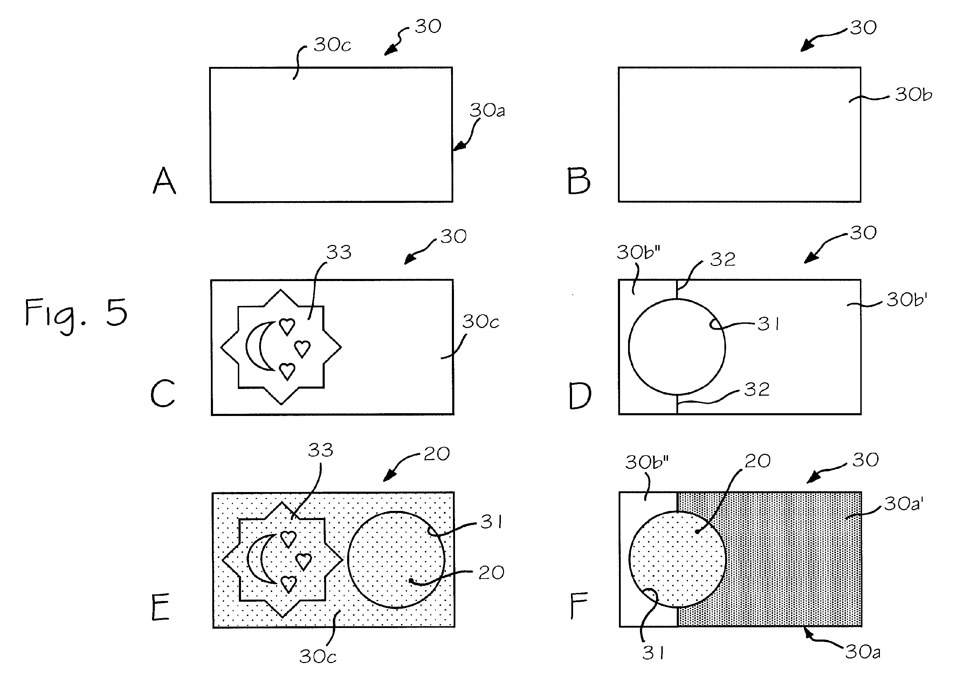

Figure 5 schematically shows the steps of the paper converting process whereto the intermediate sheet 30 is subjected, for the purposes of manufacturing a front part of the body of the cardboard 1; note in this regard that the self-adhesive 30 sheet, with the relevant thin cardboard with adhesive surface and removable film, is obtained in a known manner, which does not need to be described herein.

In parts A and B of Figure 5 the front face and the back face of the starting self-adhesive sheet 30 are visible, respectively, already cut to the desired dimensions; the front face is designated by the reference number 30c, whilst the back face is constituted by the film 30b. In a first step, illustrated in part C of Figure 5, a generic illustration - designated herein by the number 33 - is printed on the front face 30c, e.g. with offset or four-color or monochrome technique. Subsequently, as shown in part D of Figure 5, the adhesive sheet 30 is die-cut from its rear face, in order to obtain both the through opening 31 and the two cuts 32; as shown, given the presence of the opening 31 and of the two cuts 32, the film is subdivided into the two parts 30b' and 30b", which are individually removable. As shown in part E of Figure 5, the front face 30c of the sheet 30 is then plasticized, by applying the transparent plastic sheet 20. Therefore, the opening 31 of the sheet 10 is practically closed by means of a region of the plastic sheet 20. In a subsequent step, as shown in part F of Figure 5, the part of film 30b' is removed, in order to leave directly exposed the respective part of the adhesive surface 30a' of the thin cardboard 30a.

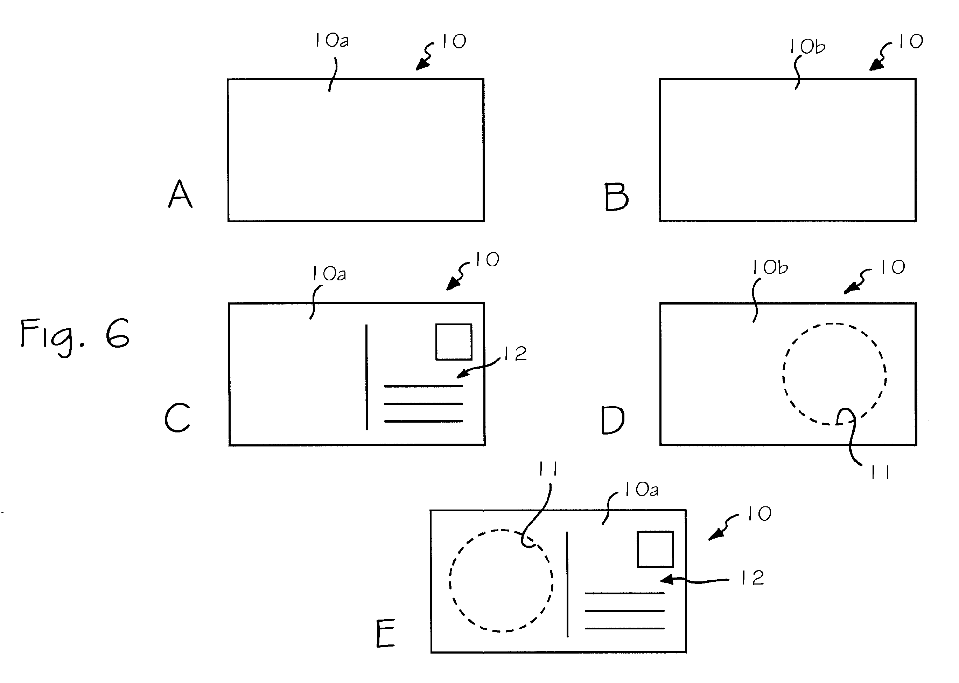

Figure 6 schematically shows the steps of the paper converting process whereto the rear sheet 10 is subjected, for the purposes of manufacturing a back part of the body of the postcard 1. In this case, too, parts A and B of Figure 6 show, respectively, the rear face and the front face of the sheet 10, designated by the references 10a and 10b, respectively. In a first step, shown in part C of Figure 6, at least the references 12 for the stamp and the address of the recipient of the postcard are printed on the rear face 10a, e.g. with offset, four colours or monochrome technique. Subsequently, as shown in parts D and E of Figure 6, the sheet 10 is die-cut, to obtain the dashed-line perforation 11.

For the purposes of the mutual fastening between the plasticized self-adhesive sheet 30 and the sheet 10, the film part 11b' of sheet 30 is removed, as explained above in relation to part F of Figure 5. On the portion of surface 30a' that remains exposed, a corresponding portion of the front face 10b of the sheet 10 is then made to adhere, in such a way that the perforation 11 is positioned at the window of the sheet 30, embodied by the opening 31 closed frontally by the respective region of the plastic sheet 20. At this point the structure of the postcard 1 is formed and it is substantially as shown in Figure 7, with a substantial portion of sheet 30 joined to a homologous substantial portion of the sheet 10 in a permanent way, i.e. in a manner that is not necessarily meant for a subsequent separation.

As exemplified in Figure 7, the portion of sheet 30 (or, more specifically, of the thin cardboard 30a) whereto the respective film portion 30b" is still associated, can be disjoined relative to the sheet 10, in such a way as to provide in fact a portion of the postcard 1, globally designated by L, that can be pulled apart; on said portion L about half of the aforesaid window extends, whilst the other half extends in the "fixed" part of the postcard 1, in which the sheets 10 and 20 are already mutually joined, defining a semi-receptacle; the simple spreading of portion L from the lower sheet 10, as shown in Figure 7, enables to easily introduce about half the disk 2 into the aforesaid semi-receptacle.

Once this partial introduction of the disk 2 is performed, the remaining part of film 30b" can be removed from the region of the sheet 30 included in portion L, so that the additional part of adhesive surface of the thin cardboard 30a is exposed; the subsequent pressure of portion L on the homologous portion of the front surface 10b of sheet 10 will enable to completely enclose the disk 2 between the front parts 20, 30 and the back part 10, at the aforesaid window. The disk 2 is then inserted inside the postcard 1, in fixed position, protected and visible from the exterior, as schematically shown in Figure 1. When desired, the disk 2 may be extracted from the postcard 1 simply removing the region of the rear sheet 10 circumscribed by the dashed-line perforation 11.

The manufacturing process of the invention was exemplified above with reference to a single postcard but it is clear that - in practice - it will be possible to operate with large size starting sheets 10, 20, 30, that will be die-cut and cut for the purpose of simultaneously forming multiple postcards 1 of the desired format.

The proposed solution allows for obtaining important advantages, both from the manufacturing viewpoint and from the viewpoint of the flexibility of use of the postcard according to the invention.

The process followed to form the body of the postcard 1 is extremely simple, economical and easy to automate, as well as based on the use of commercially available materials. The disk 2 can be inserted in the postcard 1 after formation of the postcard, and hence not necessarily in the paper converting plant, thereby also providing a commercial advantage, because postcards and disks may be marketed separately, enabling the final consumer to make the desired combinations. Obviously, the postcard according to the invention may be marketed by itself as well, and the final consumer may fit it with his/her own disk.

It will be appreciated that the accidental separation between the front part 20, 30 and the back part 10 of the postcard 10 is virtually impossible, both before and after insertion of the disk 2, thanks to the ample surfaces for mutual fastening between the parts; at the end of the paper converting process, a first substantial portion of the front part 20, 30 is anyway already permanently joined to the back part 10; once the postcard 1 is closed, the remaining substantial portion of the front part 20, 30 will also be permanently joined to the back part 10.

The postcard 1 according to the invention does not have the typical breakage risks of the solution described in WO 02/36355. Moreover, the body of the postcard 1 has minimal weight and thickness, in the order of those of the common postcards, and in any case markedly smaller than the mentioned solution of WO 02/36355.

Clearly, the dimensions of the through hole 31 and the perforation 11 will be selected according to the typical formats for optical disks and the like, including "mini CDs" or "mini DVDs", or other thin objects having normalized format. Similarly, the dimensions of the postcard 1 will preferably be normalized, for example in the formats cm 15 x 15 and cm 12 x 19.

Naturally, without altering the principle of the invention, the construction details and the practical embodiments may be widely varied from what is described and illustrated purely by way of example herein, without thereby departing from the scope of the present invention.

The perforation 11 of the sheet 10 may have different shape from the one exemplified, i.e. it may be semi-circular. The material constituting the sheets 20 and 30 may be plastic or polymeric, instead of paper.

## Claims

1. A postcard having a body that comprises a front part (20, 30) and a back part (10) mutually joined and configured to delimit therebetween a receptacle (31) for an optical disk (2) or the like, **characterized in that** a first substantial portion of the front part (20, 30) is permanently joined to a first substantial portion of the rear part (10), whereas a second substantial portion of the front part (20, 30) is separate from the back part (10), to enable access to at least a region of the receptacle (31), the second substantial portion of the front part (20, 30) being adapted to be applied in adhesive fashion to a second substantial portion of the back part (10), after positioning the optical disk (2) or the like in the receptacle (31).

2. The postcard according to claim 1, wherein
- a first substantial region of the receptacle (31) is delimited between said first substantial portions of the front part (20, 30) and of the back part (10),
- a second substantial region of the receptacle (31) is delimited between said first substantial portions of the front part (20, 30) and of the back part (10), following mutual adhesion thereof.

3. The postcard according to claim 2, wherein said second substantial portion of the front part (20, 30) is adapted to be stretched apart from said second substantial portion of the back part (10), to allow introduction of a respective part of the optical disk (2) into said first region of the receptacle (31).

4. The postcard according to claim 1 or 2, wherein the front part (20, 30) comprises
- a first layer (30) having a front face (30c) and a rear face (30b) between which a through hole (31) extends, and
- a second layer (20) applied on the front face (30c) of the first layer (30) in order to close said through hole (31) at one end thereof,
and wherein the back part comprises a third layer (10) fastened to the rear face of the first layer (30).

5. The postcard according to claim 1, wherein the receptacle (31) has a peripheral profile having a first and a second substantial sections, respectively defined in the first and in the second substantial portion of the front part (20, 30).

6. The postcard according to claim 4, wherein, at least at said second substantial portion of the front part (20, 30), the rear part (30a') of said first layer (30) is adhesive and a removable film (30b") is applied thereon.

7. The postcard according to claim 6, wherein the rear face (30a') of said first layer (30) is entirely adhesive.

8. The postcard according to claim 4, wherein the front face (30c) of said first layer (30) is entirely covered by said second layer (20), the second layer (20) being preferably constituted by a transparent plastic sheet.

9. The postcard according to claim 4, wherein the peripheral profile of said through hole (31) is globally circular.

10. The postcard according to claim 1, wherein the rear part (10) has a dashed-line perforation (11) at a position thereof corresponding to said receptacle.

11. A process for manufacturing a postcard (1) having a body that is adapted to receive a thin object (2), in particular an optical disk or the like, the process comprising the operations of:
a) providing a front part (20, 30) and a back part (10) for a body of the postcard,
b) forming a recess (31) in at least one of said front part (20, 30) and back part (10),
c) fastening together said front part (20, 30) and back part (10) such that the recess (31) of said at least one part delimits, in combination with the other part, a receptacle adapted to house said thin object (2),
the process being **characterized in that**, for the purposes of executing operation c), only a first substantial portion of the front part (20, 30) is permanently joined to a first portion of the back part (10), whereas a second substantial portion of the front part (20, 30) is kept separate from the back part (10) and arranged to be subsequently applied in adhesive fashion to a second portion of the back part (10).

12. The process according to claim 11, wherein a region of the receptacle is formed between said first substantial portions of the front part (20, 30) and of the back part (10), with the second substantial portion of the front part (20, 30) that enables access to said region of the receptacle and is applicable in adhesive fashion to the second portion of the back part (10) following positioning, in said region of the receptacle, of a respective part of said thin object (2).

13. The process according to claim 11, wherein operations a) and b) comprise the steps of:
- providing a first layer (30), preferably made of paper material, having a first and a second face;
- forming in the first layer (30) a through hole (31), which extends between said first and second face, the through hole (31) having a respective peripheral profile;
- making the first face of the first layer (30) integral with a second layer (20), preferably made of plastic material,
- making the second face of the first layer (30) integral with a third layer (10), preferably made of paper material.

14. The process according to claim 14, wherein the first layer is formed by means of a sheet (30) that is at least partially self-adhesive and comprise a substrate (30a) having an adhesive surface (30a') whereon a removable film (30b) is applied.

15. The process according to claim 14, wherein, before executing operation d), said film (30b) of the self-adhesive sheet (30) is subdivided into at least two parts (30b', 30b"), that are individually removable from the substrate (30a), where
- a first part (30b') of the film covers a first region of the substrate (30a) that includes said first substantial portion of the front part (20, 30), and
- a second part (30b") of the film covers a second region of the substrate (30a) that includes said second substantial portion of the front part (20, 30).

16. The process according to claim 15, wherein, for the purposes of executing operation d):
- said first part (30b') of the film is removed, in order to leave the adhesive surface (30a') of the first region of the substrate (30a) exposed, and
- a surface of said first substantial portion of the back part (10) is made to adhere to the adhesive surface (30a') of the first region of the substrate (30a).

17. The process according to claim 15, wherein, after an at least partial positioning of said thin object (2) in the receptacle, said second part (30b") of the film is removed, in order to leave the adhesive surface (30a') of the second region of the substrate (30a) exposed, and
- the adhesive surface (30a') of the second region of the substrate (30a) is made to adhere on the surface of said second substantial portion of the back part (10).

18. The process according to claim 11, wherein, during operation a), a dashed-line perforation (11) is made in the back part (10).
